# NEUE EUROPÄISCHE PATENTSCHRIFT

(11) **EP 3 239 435 B2**
(45) Veröffentlichungstag und Bekanntmachung des Hinweises auf die Entscheidung über den Einspruch: **03.09.2025**
(45) Hinweis auf die Patenterteilung: 02.06.2021
(21) Anmeldenummer: 17158903.9
(22) Anmeldetag: 02.03.2017
(51) Int. Cl.: E04F 17/02, C04B 28/02, C04B 40/00, C04B 111/28

(54) **BETONMISCHUNG FÜR MANTELSTEIN FÜR SCHORNSTEINE UND HERSTELLUNGSVERFAHREN**
CONCRETE MIXTURE FOR MANTLE BLOCK FOR CHIMNEYS AND METHOD
MÉLANGE DE BÉTON POUR UN PIERRE DE GAINAGE POUR CHEMINÉES ET PROCÉDÉ

(30) Priorität: 29.04.2016 DE 102016108019
(43) Veröffentlichungstag der Anmeldung: 01.11.2017
(73) Patentinhaber: Schiedel GmbH, 4542 Nussbach (AT)
(72) Erfinder: STEINECKER, Gerald, 4540 Pfarrkirchen (AT); JOST, Manfred, 95679 Waldershof (DE); RUBIN, Roberto, 95100 Selb (DE)
(74) Vertreter: Müller Schupfner & Partner Patent- und Rechtsanwaltspartnerschaft mbB (Muc)

(56) Entgegenhaltungen:
- EP-A1- 0 026 945
- EP-A2- 1 108 829
- WO-A1-2014/096701
- WO-A1-2015/181479
- CH-A- 470 558
- DE-A1- 10 025 138
- DE-A1- 10 112 195
- DE-A1- 2 213 213
- DE-A1- 2 710 975
- DE-A1- 3 413 192
- DE-B- 1 299 400
- DE-B3- 102005 031 321
- DE-U1- 20 300 312
- DE-U1- 29 913 262
- FR-A- 1 175 631
- FR-A1- 2 398 030
- FR-A1- 2 785 604
- FR-A1- 2 805 533
- US-A- 4 963 191
- Deutsche. NormD1N 18147 Teil 2, 1982

## Beschreibung

Die vorliegende Erfindung betrifft einen Mantelstein für Schornsteine, ein Verfahren zur Herstellung eines Mantelsteins sowie eine Rezeptur für eine Betonmischung, insbesondere für einen Mantelstein.

Aufgrund der Energieeinsparverordnung werden heutzutage in Neubauten und bei der Sanierung von Gebäuden die Planungsgrundsätze des energieeffizienten Bauens angewandt. Hierunter werden die Optimierung der thermischen Gebäudehülle, die Auswahl einer effizienten Heizungs- und Anlagentechnik sowie der Einsatz erneuerbarer Energien verstanden. Ziel ist es dabei, ein möglichst energiesparendes und somit ressourcenschonendes Gebäude zu erstellen. Nach heutigem Standard muss jedes Gebäude eine geplante, lückenlose, dichtende Ebene zwischen dem Innen- und Außenbereich aufweisen. Diese wird mit zunehmenden Dämmstoffstärken immer wichtiger, da der Wärmedurchgang über Transmission durch gut gedämmte Bauteile zwar sehr gering ist, aber seine Effizienz verliert, wenn ein großer Teil der zugeführten Energie durch Konvektion über Leckagen verloren geht. Es ist daher wichtig, die Luftdichtigkeit des Gebäudes im Rohbauzustand zu überprüfen, um eventuell in der Gebäudehülle vorhandene Leckagen rechtzeitig beseitigen zu können. Der Nachweis der Luftdichtigkeit des Gebäudes und das Auffinden von Leckagen erfolgt üblicherweise mit einem Differenzdruckmessverfahren, dem sogenannten Blower-Door-Test, das in der ISO 9972: 1996 und der darauf aufbauenden DIN-EN-13829 "Wärmetechnisches Verhalten von Gebäuden - Bestimmung deren Luftdurchlässigkeit" geschrieben ist.

Für die Herstellung von Schornsteinen hat sich nun das Problem ergeben, dass einige der etablierten Schornsteinsysteme nicht mehr optimal zum Einbau in energieeffiziente Häuser geeignet sind. In den letzten Jahrzehnten wurden in Neubauten überwiegend dreischalige Schornsteine verbaut, die auf der Baustelle aus einzelnen, vertikal übereinander angeordneten Schornsteinelementen zusammengefügt sind. Ein derartiges Schornsteinelement weist als äußere Schale einen Mantelstein auf, der dem Schornstein seine Stabilität verleiht. Der Mantelstein ist als dünnwandiger Hohlblockstein ausgebildet, in dessen Hohlraum ein, zum Beispiel keramisches, Innenrohr zur Rauchgasführung und eine, das Innenrohr umgebende, Wärmedämmschicht angeordnet sind. Dabei besteht zwischen dem Mantelstein und der Wärmedämmschicht ein Ringspalt, sodass der zusammengefügte Schornstein einen vom Schornsteinfuß bis zum Schornsteinkopf durchgehenden Hinterlüftungskanal aufweist.

Dieser dreischalige Schornsteinaufbau hat sich bewährt, denn die Wärmedämmschicht verhindert eine zu starke Abkühlung des Rauchgases, sodass im Innenrohr ein ausreichender Zug erhalten bleibt und die Entstehung von Kondensat vermieden wird. Wasserdampf, der durch das diffusionsoffene Innenrohr in die Wärmedämmschicht gelangt, wird über den Hinterlüftungskanal nach außen abgeführt, so dass die Wärmedämmschicht wieder trocknet.

Als nachteilig hat sich jedoch erwiesen, dass zur Herstellung der Mantelsteine ein haufwerkporiger Leichtbeton verwendet wird, bei dem die Zuschlagskörner nur punktweise durch den Zementleim miteinander verkittet sind, sodass zwischen den Zuschlagskörnern große Poren verbleiben. Die Mantelsteine weisen zwar eine geringe Rohdichte von ca. 1.200 kg/m³ auf und sind daher bei der Montage leicht zu handhaben, aufgrund ihrer porösen Struktur sind sie aber luftdurchlässig. Wird nun ein Gebäude mit einem derartigen (dreischaligen) Schornstein einem Blower-Door-Test unterzogen, dann herrscht im Lüftungskanal des Schornsteins der normale Umgebungsdruck, während im Inneren des Gebäudes ein Über- bzw. Unterdruck erzeugt wird. Aufgrund der erzeugten Druckdifferenz strömt die Luft durch den porösen Leichtbeton des Mantelsteins hindurch, was zu einem Abbau der Druckdifferenz führt und so auf eine Leckage in der Gebäudehülle hinweist.

Um die durch den Schornstein verursachte Undichtigkeit des Gebäudes bei der Durchführung des Blower-Door-Tests zu beseitigen, muss zumindest der in der thermischen Gebäudehülle befindliche Teil des Schornsteins vor der Durchführung des Tests allseitig verputzt werden. Das allseitige Verputzen des Schornsteins lässt sich jedoch auf der Baustelle nicht immer realisieren. Dies kann an der Einbausituation des Schornsteins liegen. Wird der Schornstein beispielsweise in einer Zimmerdecke eingebaut, dann liegen die Mantelsteine mit zwei ihrer vier Außenflächen direkt an der Wand an. Es können also nur zwei Außenflächen verputzt werden. Im Fertighausbau besteht zudem das Problem, dass aus den Fertighauselementen zuerst eine luftdichte Gebäudehülle erstellt werden muss. Dabei müssen Fugen und Spalte zwischen den Fertighauselementen sorgfältig abgedichtet werden. Nach der Erstellung des Gebäudes wird die Luftdichtigkeit des Gebäudes geprüft - und zwar ohne dass die Wand und die Schornsteinflächen beplankt bzw. verputzt sind. Diese frühzeitige Durchführung des Blower-Door-Tests ist im Fertighausbau unerlässlich, denn eventuelle Undichtigkeiten an den Fugen und Spalten können nur beseitigt werden, wenn noch keine Beplankung bzw. Verputzung erfolgt ist. Um im Fertighausbau eine frühzeitige Durchführung des Blower-Door-Tests zu ermöglichen, werden die Mantelsteine der Schornsteine werksseitig an ihren Außen- und/oder Innenflächen beispielsweise mit einer Dichtschlämme versehen. Der Auftrag der Dichtschlämme ist für den Schornsteinhersteller aber mit einem zusätzlichen Arbeitsschritt und in der Folge mit erhöhten Herstellkosten verbunden.

Die WO 2014/096701 A1 betrifft eine Zusammensetzung für Beton oder Mörtel mit einer Dichte zwischen 500 und 1.400 kg/m³.

Die US-4,963,191 betrifft eine Zementzusammensetzung zur Auskleidung eines Kamins.

Die DE 10 2005 031 321 B3 betrifft eine Kaminabdeckplatte aus Feinbeton, welche im Gießverfahren aus mit Fasern verstärkten Feinbeton hergestellt ist.

Die DE 27 10 975 A1 betrifft eine zementhaltige Mischung, welche Zement, Wasser, einen porösen, leichtgewichtigen Zuschlagsstoff sowie ein Dispergiermittel und Geliermittel enthält.

Die CH 470 558 A betrifft ein Verfahren zum Herstellen von Formstücken für Innenrohrkamine, bei welchem ein vorgefertigtes Keramikinnenrohr mit einer Isoliermassenschicht aus Perlite, Bindemitteln und Wasser umgeben wird.

Die FR 2 785 604 offenbart einen quadratischen oder rechteckigen Mantelstein für Schornsteine konform mit der französischen Norm XP P 51-321, welcher selbst unter Hitzeeinfluss eine Luftdurchlässigkeit von < 3 (l/s)/m2 (< 10,8 (m3/h)/m2) aufweist und aus folgender Mischung hergestellt werden kann: 14-40 Gew% Tonerdezement, 60-80 Gew% feuerfester Zuschlag, 0,125-4 Gew% Glasfaser, geringe Menge Plastifizierer. 1 Volumenteil dieser Mischung wird mit 0,1-0,2 Volumenteilen Wasser vermischt.

Es ist daher Aufgabe der vorliegenden Erfindung, einen Mantelstein für einen Schornstein, ein Verfahren zur Herstellung eines Mantelsteins sowie eine Rezeptur für eine Betonmischung, insbesondere für einen Mantelstein, anzugeben, welche ohne zusätzliche Maßnahmen wie beispielsweise (Dicht-)Schlämmen oder Verputzen, die Durchführung des Blower-Door-Tests erlauben, und welche für einen mehrschaligen Aufbau des Schornsteins mit Innenrohr und Wärmedämmung geeignet sind. Im Vordergrund stehen dabei außerdem eine leichte Handhabung und eine wirtschaftliche Fertigung.

Diese Aufgabe wird durch einen Mantelstein gemäß Anspruch 1 gelöst. Weitere Vorteile und Merkmale ergeben sich aus den Unteransprüchen sowie der Beschreibung und den beigefügten Figuren.

Erfindungsgemäß umfasst ein Mantelstein für Schornsteine eine Betonmischung, wobei die Betonmischung eine Rohdichte zwischen 1000 kg/m³ bis 1300 kg/m³ aufweist und wobei der Mantelstein entlang einer Strömungsrichtung, bei einer Wandstärke von bis zu 5 cm, bei einem Differenzdruck von 50 Pa und bezogen auf eine Außenfläche des Mantelsteins, einen Leckagevolumenstrom von kleiner 1,4 (m³ /h)/m² aufweist, wobei die Betonmischung aus einer Rezeptur hergestellt ist, welche einen Plastifizierer umfasst, und wobei die Rezeptur einen w/z-Wert (Wasser-Zement-Wert) von größer 0,6 aufweist. In bevorzugten Ausführungsformen liegt der Leckagevolumenstrom sogar unter etwa 1,3 (m³ /h)/m² , z. B. bei etwa 1,275 (m³ /h)/m² , bis zu etwa unter 1,1 (m³ /h)/m² , abhängig von der Wandstärke sogar noch niedriger. Die angegebenen Werte, betreffend die Luftdichtigkeit, beziehen sich dabei auf einen trockenen Mantelstein. Per Definition gilt ein mineralisches Produkt als trocken, wenn, bei 110 °C getrocknet, Gewichtskonstanz bei zwei aufeinanderfolgenden Wägungen im zeitlichen Abstand von ca. einem Tag gegeben ist. Dies ist eine überraschende Abkehr von der seit Jahrzehnten bestehenden Regel, dass zur Herstellung von Mantelsteinen, welche üblicherweise per Vibrations verfahren mit Auflast-Formenstempel hergestellt werden, nur "sehr trockene" (Leicht-)Betonmischungen geeignet sind. Die Herstellung von Mantelsteinen im Vibrationsverdichtungsverfahren erfolgt dabei z. B. wie folgt: einer Rüttelvorrichtung oder Schwingtischvorrichtung wird eine ebene Formplatte zugeführt, auf die eine mit Formkernen versehene Form aufgesetzt wird, in die anschließend die Betonmischung eingefüllt wird. Oberhalb der Form befindet sich eine reversierend bewegbare Auflastvorrichtung (Formenstempel), die in die Form einfahrbar ist und die Betonmischung in der Form während der Vibrationen durch die Auflast gravimetrisch und/oder hydraulisch zusätzlich verdichtet. Nach dem Verdichtungsvorgang wird der Formenstempel wieder zurückgefahren und die Form samt Formkernen wird von der Formplatte abgehoben, sodass dort nur noch der feuchte Mantelstein bleibt. Der Mantelstein kann auf dieser Formplatte der nachfolgenden Bearbeitungsstation zugeführt werden. Wird der Wasserzuschlag bei der Betonmischung zu hoch angesetzt, dann sind die frisch ausgeformten, dünnwandigen Mantelsteine nicht formstabil, das heißt sie werden bauchig und fallen beim Weitertransport in sich zusammen. Es hat sich aber gezeigt, dass bei erhöhter Wassermenge und bei gleichzeitiger Zugabe eines Plastifizierers die Festigkeits - und Verarbeitungseigenschaften der Betonmischung sowie die Luftdichtigkeit des ausgehärteten Mantelsteins extrem verbessern lassen. Gemäß verschiedenen Ausgestaltungen kann der Wasserzementwert auch höhere Werte, beispielsweise im Bereich von 0,7 und mehr, annehmen. Die Wahl des Plastifizierers ist nicht kritisch, sodass an dieser Stelle auf die Angabe eines speziellen Typs verzichtet wird. Zweckmäßigerweise wird ein im Handel erhältlicher Plastifizierer verwendet. Grundsätzlich zeichnen sich derartige Plastifizierer insbesondere dadurch aus, dass sie zu einer Herabsetzung der Oberflächenspannung des Wassers beitragen. Der Einsatz des Plastifizierers sorgt damit für eine sehr gute Dispergierung und Benetzung des Zements in der Betonmischung, sodass ein homogener und niedrigviskoser Zementleim entsteht, der eine erhebliche Verbesserung der Verdichtungswilligkeit der Betonmischung ermöglicht. Die in die Form gefüllte Betonmischung wird beim Verdichtungsvorgang Vibrationen ausgesetzt, so dass sich der Zementleim verflüssigt und die Hohlräume zwischen den Zuschlagskörnern ausgefüllt werden. Die Folge ist ein sehr dichtes und homogen aussehendes Betongefüge. Poröse Stellen werden minimiert und die direkt mit der Wand der Form in Berührung stehenden Oberflächen des Mantelsteins werden geglättet, sodass der Mantelstein insgesamt außen bzw. Grenzflächen aufweist, die nicht nur ein verbessertes optisches Erscheinungsbild gegenüber dem Stand der Technik aufweisen sondern auch einen erheblichen Beitrag zur (Luft-)Dichtheit leisten. Ein bevorzugter Plastfizierer weist z. B. die folgenden Merkmale auf:
- Wirksame Bestandteile: modifizierte Polycarboxylate
- Form: flüssig
- Dichte: 1,04 +/- 0,02 g/cm³
- pH-Wert: 6,5 +/- 1
- Chloridgehalt: < 0,1 M.-%
- Alkaligehalt als Na2 O-Äquivalent: < 4,0 M.-%
- Verarbeitbarkeit ab ca. +1 °C.

Die Angaben in Bezug auf den Leckagevolumenstrom beziehen sich z. B. auf einen (im Querschnitt) quadratischen Mantelstein mit Seitenlängen von etwa 36x36 cm oder einen (im Querschnitt) rechteckigen Mantelstein mit Seitenlängen von etwa 36x50 cm, wobei die Wandstärken bevorzugt zwischen 3 und 5,5 cm, besonders bevorzugt zwischen 3,5 und 5 cm, liegen. Die Flächenangaben, betreffend den Leckagevolumenstrom, beziehen sich auf die Außenfläche des Mantelsteins bzw. der Mantelsteine. Die Außenfläche pro einem Meter Aufbauhöhe, was z. B. drei aufeinander angeordneten Mantelsteinen entspricht, liegt bei der 36x36-Variante bei etwa 1,44 m² , bei der 36x50-Variante bei etwa 1,72 m². Bezogen auf die Aufbauhöhe bei der 36x36-Variante oder bei der 36x50-Variante liegen die Werte für die Lufdichtigkeit bei etwa 2 m³ /h pro m Aufbauhöhe. Die maximale Rohdichte liegt in einem Bereich zwischen 1.000 und 1.300 kg/m³, bevorzugt in einem Bereich von etwa 1.050 - 1.250 kg/m³. Die angesprochene Strömungsrichtung ist als eine Richtung im Wesentlichen senkrecht zu einer Kaminrichtung zu verstehen. Die Strömungsrichtung ist somit zweckmäßigerweise im wesentlichen senkrecht zu der Außenfläche des Mantelsteins bzw. der Mantelsteine orientiert.

Konventionelle Mantelsteine weisen unter den oben genannten geometrischen Randbedingungen Leckagevolumenströme (bezogen auf die Aufbauhöhe) in einem Bereich von etwa 7 bis 50 (m³/h)/m auf. Die hervorragende Luftdichtigkeit des vorliegenden Mantelsteins wird insbesondere dadurch erreicht, das der Luftanteil des Mantelsteins bzw. der fertigen Betonmischung äußerst gering ist. So weisen 1 m³ Betonmischung etwa 8-12 dm³, bevorzugt 9,5 bis 10,5 dm³, Luftvolumen auf. Bei konventionellen Leichtbetonmischungen liegt der Anteil dagegen bei etwa 150 dm³. Erkennbar wird dies sowohl an der Oberfläche des Mantelsteins als auch an dessen Schnittbild. Während konventioneller Leichtbeton eine sehr offenporige Struktur mit vielen Lufteinschlüssen aufweist, zeigt der vorliegende Mantelstein ein sehr gleichmäßiges, geschlossenes Gefügebild. Die Oberfläche des Mantelsteins weist eine auffallend niedrige Oberflächenrauigkeit auf.

Um im Stand der Technik die erforderliche Gasdichtigkeit/Luftdichtigkeit zu erzielen, wurde, neben der Verwendung entsprechender Dichtschlämmen, ein gefügedichter Leichtbeton eingesetzt oder aber es wurden die Wandstärken der Mantelsteine erhöht. Beide Ansätze waren nicht zielführend, da gefügedichter Leichtbeton (hergestellt auf Steinformmaschinen per Vibrationsver dichtung und Sofortentschalung), welcher eine ausrei chende Gasdichtigkeit bereitstellt, Rohdichten von 1.600 kg/m³ und mehr aufweist. Die Vergrößerung der Wand stärke des Mantelsteins bedingt entweder eine Vergrö ßerung der Außenabmessungen oder eine Verringerung der Innenabmessungen, wobei beides unerwünscht ist, denn größere Außenmaße bedeuteten Wohnraumver lust im Gebäudeinneren, während geringere Innenab messungen des Hohlraums einen mehrschaligen Aufbau mit Innenrohr und Wärmedämmung nicht mehr zulassen. Durch die Verwendung des Plastifizierers unter Einstel lung des ungewöhnlich hohen Wasserzementwerts konnten die aus dem Stand der Technik bekannten Nachteile in idealer Weise (mit einer handelsüblichen Steinformmaschine) überwunden werden.

Zweckmäßigerweise weist die Betonmischung Zuschlagsstoffe auf, wobei die Zuschlagsstoffe bevorzugt feine und/oder grobe Leichtgewichtszuschlagsstoffe umfassen.

Zweckmäßigerweise ist eine Korngröße der feinen Zuschlagsstoffe kleiner als etwa 4 mm, wobei eine Korngröße der groben Zuschlagsstoffe zweckmäßigerweise in einem Bereich von etwa 3 bis 8 mm liegt.

Gemäß einer Ausführungsform sind die Leichtgewichtszuschlagsstoffe, zumindest teilweise, porös, wobei die porösen Leichtgewichtszuschlagsstoffe in der Betonmischung Hohlräume/Lufteinschlüsse aufweisen. Bei porösen oder offenporigen Zuschlagsstoffen besteht allgemein das Problem, dass sie sich mit Wasser bzw. Zementleim vollsaugen (können). Insbesondere, wenn sich die porösen Zuschlagsstoffe mit Zementleim vollsaugen, erhöht dies die Rohdichte der Betonmischung, da letztlich die Porosität der Zuschlagsstoffe entscheidend die Rohdichte der Betonmischung bzw. das Gewicht des Mantelsteins beeinflusst. Vorteilhafterweise wird nun dadurch, dass durch die Zugabe des Plastifizierers eine äußerst gute Dispergierung und Benetzung des Zements erreicht wird, dieses Problem bzw. dieses Vollsaugen verhindert. Es entsteht sozusagen ein "idealer" Zementleim, welcher zwar die Zwischenräume zwischen den Zuschlagsstoffen ausfüllt, nicht aber in die zum Teil mikroskopisch kleinen Kanäle der porösen Zuschlagsstoffe eindringen kann.

Gemäß verschiedenen Ausführungsformen können die Leichtgewichtszuschlagstoffe ausgewählt sein aus zumindest einem der folgenden Bestandteile/Materialien: Blähgas, Blähschiefer, Blähton, Kesselsand, Lava, Naturbims, Waschbims oder Ziegelsplitt. Der Anteil an Leichtgewichtszuschlagstoffe bezogen auf ein Gesamtgewicht der Betonmischung liegt bei etwa 29 - 73 Gew.%. Der gesamte Anteil an Leichtgewichtszuschlagsstoffe kann gemäß einer Ausführungsform aus einem einzigen der oben genannten Bestandteile bestehen, beispielsweise zu 100 % aus Blähton. Es ist aber auch möglich, den gesamten Anteil auf zwei oder mehrere Bestandteile aufzuteilen, beispielsweise 25 % Blähton, 25 % Naturbims und 50 % Blähschiefer.

Neben den vorgenannten Leichtgewichtszuschlagsstoffen umfasst die Betonmischung auch Sand, beispielsweise Natur- oder Bruchsand, bevorzugt mit einer Korngröße von kleiner als 4 mm, wobei auch Werte bis zu 8 mm möglich sind. Der Sandanteil an der Betonmischung beträgt in verschiedenen Ausführungsformen etwa 0 - 46 Gew.%.

Gemäß einer Ausführungsform weist die Betonmischung auch Normalzuschläge auf, beispielsweise in Form von Kieselsteinen, deren Rohdichte zwar höher ist, wodurch aber die Kosten gesenkt werden können.

Gemäß einer Ausführungsform kann die Betonmischung auch einen Faseranteil umfassen, insbesondere um die Festigkeit des Mantelsteins zu erhöhen. Derartige Fasern können beispielsweise aus Polypropylen, Stahl, Glas und/oder Kohlenstoff hergestellt sein.

Entscheidend ist, dass der Mantelstein keine zusätzliche Beschichtung innen und/oder außen aufweist, um den äußerst geringen Leckagevolumenstrom zu erzielen.

Zweckmäßigerweise weist der Mantelstein entlang der Strömungsrichtung eine gleichmäßige Struktur auf. Mit anderen Worten weist also die Betonmischung eine gleichmäßige Struktur auf. Die Struktur der Betonmischung ist durch Zementleim gebildet, in welchem die Leichtgewichtszuschlagsstoffe und gegebenenfalls Normalzuschläge und/oder Fasern etc. angeordnet sind. Zweckmäßigerweise füllt der Zementleim den Hohlraum zwischen den Zuschlagsstoffen und den anderen genannten Stoffen aus, ohne in diese Bestandteile einzudringen, wodurch das Gewicht der Betonmischung erhöht werden würde. Dies bedeutet allerdings nicht, dass die Betonmischung bzw. deren Struktur keine Luftporen oder Hohlräume aufweisen darf. Gegebenenfalls kann die Rezeptur sogar entsprechende Porenbildner, umfassend Tenside oder Eiweiße, aufweisen, welche explizit die Bildung derartiger Luftporen/Hohlräume ermöglichen.

Gemäß einer bevorzugten Ausführungsform wird der Mantelstein durch ein Vibrationsverdichtungsverfahren bzw. durch eine Vibrationsverdichtung hergestellt. Wie bereits erwähnt, wird hierbei beispielsweise einer Vibrationsvorrichtung eine zweckmäßigerweise ebene Formplatte zugeführt, auf die eine mit Formkernen versehene Form aufgesetzt wird, in die anschließend der Leichtbeton eingefüllt wird. Oberhalb der Form befindet sich ein reversierend bewegbarer Pressstempel/Formenstempel, der in die Form einfahrbar ist und den Leichtbeton in der Form unter Vibrationen verdichtet. Nach dem Verdichtungsvorgang wird der Pressstempel wieder zurückgefahren und die Form samt Formkernen wird von der Formplatte aufgehoben, so dass dort nur noch der feuchte Mantelstein verbleibt. Der Mantelstein kann dann auf seiner Formplatte der nachfolgenden Bearbeitungsstation zugeführt werden.

Mit Vorteil ist eine Oberfläche/Außenfläche des Mantelsteins nach dem Formen/Entschalen derart ausgebildet, dass, ohne beispielsweise weitere Zwischenarbeiten, ein sofortiges (An-)Streichen ermöglicht ist. Zweckmäßigerweise ist also aufgrund der guten, gleichmäßigen Oberflächenbeschaffenheit z. B. kein Verputzen notwendig. Mit Vorteil ist der Mantelstein mit einer im Wesentlichen durchgängigen Schicht aus Zementstein bedeckt, welche in bevorzugten Ausführungsformen etwa in einem Bereich von 0,1 mm liegt. Bei herkömmlichen Leichtbeton-Mantelsteinen sind auf deren Oberflächen viele Verdichtungsporen zu erkennen und zum Teil nicht von Zementstein bedeckte Zuschläge/Zuschlagsstoffe. Der vorliegende Mantelstein weist dagegen eine glatte Oberfläche mit wenigen Verdichtungsporen auf, wobei hierzu im Anschluss an das Entformen keine weiteren Bearbeitungsschritte notwendig sind.

Weiterhin kann auch auf ein Verfahren zur Herstellung einer Betonmischung, insbesondere für einen Schornstein vorgesehen sein, umfassend die Schritte:
- Herstellen von Zementleim aus Wasser, Zement und einem Anteil eines Plastifizierers, wobei der w/z-Gehalt auf einen Wert von größer 0,6 eingestellt wird;
- Mischen des Zementleims mit Zuschlagsstoffen, insbesondere Leichtgewichtszuschlagsstoffen.

Die Herstellungsschritte umfassen dabei:
- Dosierung der Zuschlagsstoffe und des (Vor-)Wassers und der Mischung;
- Dosierung von Zement und Mischung;
- Dosierung des Plastifizierers und der Mischung.

Die Verwendung des Plastifizierers ermöglicht das Einstellen eines ungewöhnlich hohen Wasserzementwerts. Dies ermöglicht die Herstellung von Mantelsteinen, welche trotz ihres geringen Gewichts extrem luftdicht sind. Hierzu trägt auch ein "Verschmieren" der Außenfläche des Mantelsteins bei, welches durch den hohen Wasseranteil erreicht wird und durch welches an der Oberfläche des Mantelsteins vorhandene Luftporen geschlossen werden können. Das Verschmieren erfolgt bevorzugt beim Formen bzw. Entformen/Entschalen des Mantelsteins in der Form, wie eingangs beschrieben. In der Folge ist auch die Oberflächenrauigkeit deutlich geringer als bei herkömmlichen Mantelsteinen aus Leichtbeton.

Zweckmäßigerweise umfasst das Verfahren zur Herstellung weiter den Schritt:
- Formen eines Mantelsteins aus der Betonmischung, wobei der Mantelstein eine Rohdichte von weniger als 1.300 kg/m³ aufweist.

Insofern ist das Verfahren zur Herstellung einer Betonmischung insbesondere als ein Verfahren zur Herstellung eines Mantelsteins zu verstehen.

Zweckmäßigerweise umfasst das Verfahren weiter den Schritt:
- Formen des Mantelsteins mittels eines Vibrationsverdichtungsverfahrens, insbesondere eines Vibrationsverdichtungsverfahrens mit Auflast.

Weiterhin kann auch eine Rezeptur für eine Betonmischung bzw. auf eine Frischbetonmischung, insbesondere für einen Mantelstein, vorgesehen sein, wobei die Rezeptur zumindest die Bestandteile Zement, Wasser und Zuschlagsstoffe aufweist, wobei die Rezeptur einen Plastifizierer umfasst, und wobei der w/z-Gehalt (Wasser-Zement-Wert) der Rezeptur größer 0,6, beispielsweise etwa 0,67 bis 0,75, ist. Bei den Zuschlagsstoffen handelt es sich bevorzugt um Leichtgewichtszuschlagsstoffe.

Zweckmäßigerweise liegt ein Wasseranteil der Rezeptur bei etwa 9 bis 14 Gew.%, bevorzugt bei etwa 11 bis 12 Gew.%. Je nach Feuchtezustand etwaiger Zuschlagsstoffe kann der Wassergehalt der Rezeptur/Mischung insgesamt durchaus höher liegen. Die vorgenannten Werte beziehen sich daher insbesondere auf eine Rezeptur, bei der der Feuchtegehalt der Zuschlagsstoffe etc. nicht berücksichtigt wird.

Der Anteil des Plastifizierers an der Rezeptur beträgt zweckmäßigerweise etwa 0,05 bis 0,2 Gew.%, bevorzugt etwa 0,11 bis 0,13 Gew.%, beispielsweise 0,12 Gew.%.

Gemäß einer Ausführungsform umfasst die Rezeptur auch einen Stabilisierer. Dessen Anteil an der Rezeptur beträgt zweckmäßigerweise etwa 0,05 bis 0,2 Gew.%, bevorzugt etwa 0,11 bis 0,13 Gew.%, beispielsweise 0,12 Gew.%.

Zweckmäßigerweise umfasst die Rezeptur einen Sandanteil, welcher etwa 40 bis 47 Gew.%, bevorzugt etwa 42 bis 45 Gew.%, beträgt. Der Anteil an Leichtgewichtszuschlagsstoffen liegt gemäß verschiedenen Ausführungsformen zweckmäßigerweise in einem Bereich von etwa 25 bis 30 Gew.%. Der Anteil an feinen Leichtgewichtszuschlagsstoffen liegt in verschiedenen Ausführungsformen in einem Bereich von etwa 12 bis 15 Gew.%, bevorzugt etwa 13 bis 14 Gew.%, der Anteil an groben Leichtgewichtszuschlagsstoffen in einem Bereich von etwa 14 bis 16 Gew.%, bevorzugt bei etwa 15 Gew.%. Der Zementanteil beträgt zweckmäßigerweise etwa 15 bis 18 Gew.%, bevorzugt etwa 16 bis 17 Gew.%.

Die Angaben in Gew.% beziehen sich dabei immer auf die Masse einer Gesamtmischung.

Gemäß einer bevorzugten Ausführungsform wird der w/z-Wert (Wasserzementwert) auf ca. 0,7 eingestellt. Ein Verhältnis der Masse (in [kg]) von Blähton zur Masse (in [kg]) von Sand liegt dabei bevorzugt in einem Bereich von etwa 0,55 bis 0,75, besonders bevorzugt bei etwa 0,65. Ein Verhältnis der Masse des Plastifizierers zur Masse des eingesetzten Wassers liegt bevorzugt in einem Bereich von etwa 0,01 bis 0,02. Bevorzugt wird für den Blähton eine Mischung verwendet, welche einen Anteil an Blähton mit einer Korngröße von etwa 1 bis 4 mm (fein) und einen Anteil von Blähton mit einer Korngröße von etwa 4 bis 8 mm (grob) verwendet. Ein Verhältnis der Masse (in [kg]) des feinen Blähtons zur Masse (in [kg]) des groben Blähtons liegt z. B. in einem Bereich von etwa 0,85 bis 0,95, bevorzugt bei etwa 0,9.

Eine so zusammengesetzte Rezeptur/Frischbetonmischung weist vorteilhafterweise einen Luftgehalt von etwa 1 % auf. Dieser geringe Wert, welcher bei herkömmlichen Frischbeton-Mischungen für Mantelsteine in einem Bereich von etwa 15 % liegt, ist maßgeblich für die ausgezeichnete Luftdichtheit verantwortlich.

Weitere Vorteile und Merkmale ergeben sich aus der nachfolgenden Beschreibung einer bevorzugten Ausführungsform eines Mantelstein bzw. einer Betonmischung. Es zeigen:
- Figur 1a:: eine Schnittdarstellung einer Ausführungsform einer erfindungsgemäßen Betonmischung;
- Figur 1b:: eine Schnittdarstellung einer konventionellen Leichtbetonmischung;
- Figur 2a:: eine Oberfläche einer Ausführungsform eines erfindungsgemäßen Mantelsteins;
- Figur 2b:: eine Oberfläche einer Ausführungsform eines Mantelsteins aus einer konventionellen Leichtbetonmischung;
- Figur 3:: einen Querschnitt eines Mantelsteins.

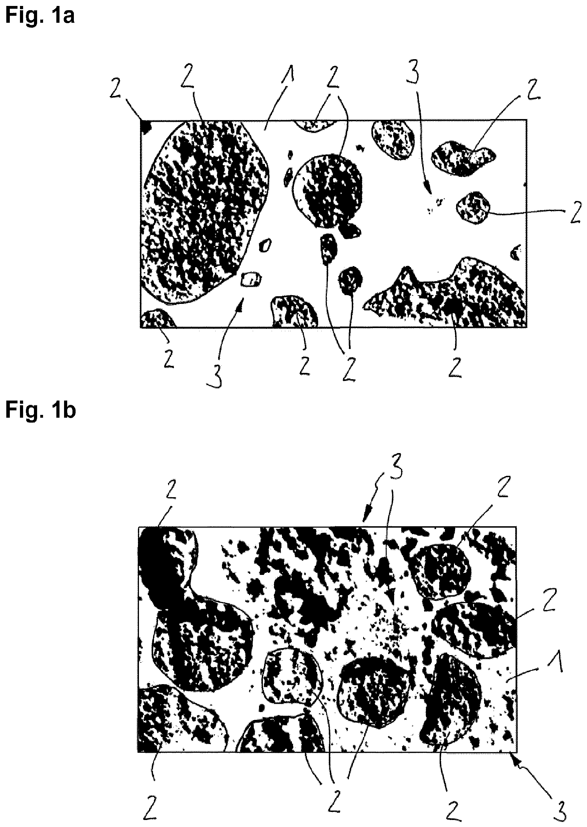

**Fig. 1a** zeigt eine Schnittdarstellung einer Ausführungsform einer erfindungsgemäßen Betonmischung. Im Vergleich zu **Fig. 1b** ist zu erkennen, dass der Anteil an Luftporen 3 deutlich höher ist. Das Gefüge 1 umfasst in beiden Fällen Zuschlagsstoffe 2. Das Gefüge 1 des konventionellen Leichtbetons ist aber viel stärker von Luftporen 3 durchsetzt, wodurch dessen Luftdichtigkeit deutlich geringer ist.

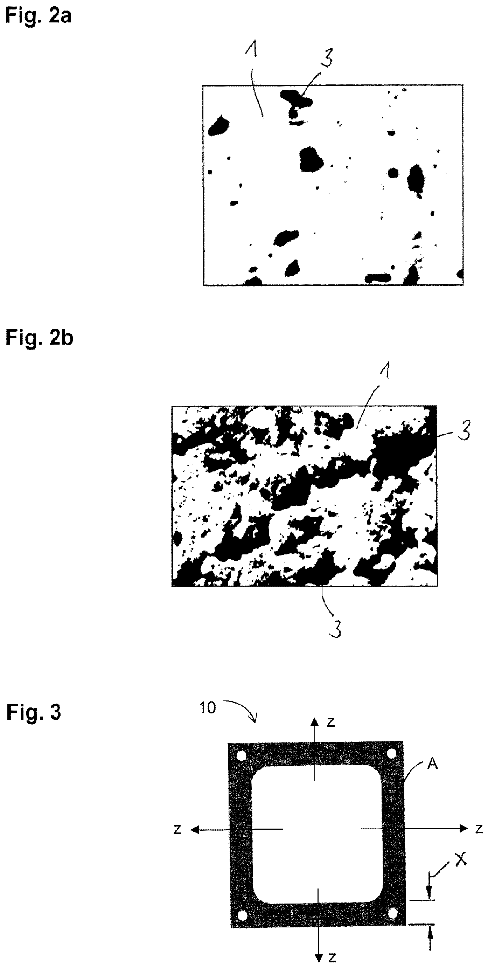

Deutliche Unterschiede sind auch an den Oberflächen der Mantelsteine zu erkennen. So zeigt **Fig. 2a** eine Oberfläche einer Ausführungsform eines erfindungsgemäßen Mantelsteins, während **Fig. 2b** eine Oberfläche einer Ausführungsform eines Mantelsteins aus einer konventionellen Leichtbetonmischung zeigt. Auch hier ist zu erkennen, dass die Oberfläche des herkömmlichen konventionellen Mantelsteins aus Leichtbeton deutlich mehr Luftporen 3 aufweist als die Ausführungsform des erfindungsgemäßen Mantelsteins in Fig. 2a. Die weißen Flächen stellen das (geschlossene) Gefüge 1 bzw. die äußere Schicht aus Zementleim dar, die schwarzen Bereiche die Luftporen 3.

Die Figuren basieren auf echten Bildaufnahmen, welche zur Gewährleistung eines ausreichenden Kontrastes in schwarz/weiß Darstellungen umgewandelt wurden.

Die **Fig. 3** zeigt abschließend einen Querschnitt durch einen in etwa quadratischen Mantelstein 10 bzw. einen entsprechenden Mantelstein in der Draufsicht, welcher eine Wandstärke x und eine Außenfläche A aufweist. Die Seitenlängen liegen bei der hier skizzierten Ausführungsform bei etwa 36x36 cm. Die Wandstärke x liegt in verschiedenen Ausführungsformen zwischen etwa 3 und 7 cm, meist bei etwa 5 cm. Die Fig. 3 zeigt einen Mantelstein mit einer im Wesentlichen viereckigen Innengeometrie. Möglich wäre aber auch eine runde oder sogar kreisrunde Innengeometrie, wobei mit der Wandstärke x dann eine minimale Wandstärke gemeint ist. In der dargestellten Ausführungsform ist die Strömungsrichtung z eines Leckagevolumenstroms eingezeichnet.

### Bezugszeichenliste

- 1: Gefüge
- 2: Zuschlagsstoff
- 3: Luftpore(n)
- 10: Mantelstein
- A: Außenfläche
- x: Wandstärke
- z: Strömungsrichtung Leckagevolumenstrom

## Patentansprüche

1. Mantelstein für Schornsteine mit einem mehrschaligen Aufbau mit Innenrohr und Wärmedämmung,
wobei der Mantelstein als dünnwandiger Hohlblockstein ausgebildet ist, in dessen Hohlraum das Innenrohr zur Rauchgasführung und die, das Innenrohr umgebende, Wärmedämmung anordenbar sind,
hergestellt aus einer Betonmischung,
wobei die Betonmischung eine Rohdichte zwischen 1000 bis 1300 kg/m³ aufweist,
**dadurch gekennzeichnet,**
**daß** der Mantelstein (10) entlang einer Strömungsrichtung (z), bei einer Wandstärke (x) von bis zu 5 cm, bei einem Differenzdruck von 50 Pa und bezogen auf eine Außenfläche (A) des Mantelsteins (10), einen Leckagevolumenstrom von kleiner 1,4 (m³/h)/m² aufweist,
wobei die Betonmischung aus einer Rezeptur hergestellt ist, welche einen Plastifizierer umfasst, und
wobei die Rezeptur einen w/z-Wert von > 0,6 aufweist.

2. Mantelstein nach Anspruch 1,
wobei die Betonmischung Zuschlagsstoffe aufweist,
wobei die Zuschlagsstoffe feine und/oder grobe Leichtgewichtszuschlagsstoffe umfassen.

3. Mantelstein nach einem der vorhergehenden Ansprüche,
wobei eine Korngröße der feinen Leichtgewichtszuschlagsstoffe kleiner als etwa 4 mm ist, und
wobei eine Korngröße der groben Leichtgewichtszuschlagsstoffe in einem Bereich von etwa 3 bis 8 mm liegt.

4. Mantelstein nach einem der Ansprüche 2-3,
wobei die Leichtgewichtszuschlagsstoffe zumindest teilweise, porös sind, und
wobei die porösen Leichtgewichtszuschlagsstoffe in der Betonmischung Hohlräume/Lufteinschlüsse aufweisen.

5. Mantelstein nach einem der Ansprüche 2-4,
wobei die Leichtgewichtszuschlagsstoffe ausgewählt sind aus zumindest einem der folgenden Bestandteile: Blähglas, Blähschiefer, Blähton, Kesselsand, Lava, Naturbims, Waschbims oder Ziegelsplitt.

6. Mantelstein nach einem der vorhergehenden Ansprüche,
wobei der Mantelstein keine zusätzliche Beschichtung innen und/oder außen aufweist.

7. Mantelstein nach einem der vorhergehenden Ansprüche,
wobei der Mantelstein entlang der Strömungsrichtung eine gleichmäßige Struktur aufweist.

8. Mantelstein nach einem der vorhergehenden Ansprüche,
welcher als durch ein Vibrationsverdichtungsverfahren, insbesondere mit Auflast, hergestellter Mantelstein ausgebildet ist.

## Claims

1. A mantle block for chimneys with a multi-shell structure with inner pipe and thermal insulation,
wherein the mantle block is designed as a thin-walled hollow block, in the cavity of which the inner pipe for flue gas guidance and the thermal insulation surrounding the inner pipe can be arranged,
produced from a concrete mixture,
wherein the concrete mixture has a bulk density between 1000 to 1300 kg/m³,
**characterized in that**
the mantle block (10) along a flow direction (z) has a leakage volume flow of less than 1.4 (m³/h)/m² for a wall thickness (x) of up to 5 cm, at a differential pressure of 50 Pa and relative to an outer surface (A) of the mantle block (10),
wherein the concrete mixture is prepared from a formulation comprising a plasticiser, and
wherein the formulation has a w/c ratio of > 0.6.

2. The mantle block according to claim 1,
wherein the concrete mixture comprises aggregates,
wherein the aggregates comprise fine and/or coarse lightweight aggregates.

3. The mantle block according to any one of the preceding claims,
wherein a particle size of the fine lightweight aggregates is less than about 4 mm, and
wherein a grain size of the coarse lightweight aggregates is in a range of about 3 to 8 mm.

4. The mantle block according to any one of claims 2-3,
wherein the lightweight aggregates are, at least in part, porous, and
wherein the porous lightweight aggregates have cavities/air pockets in the concrete mixture.

5. The mantle block according to any one of claims 2-4,
wherein the lightweight aggregates are selected from at least one of the following: Expanded glass, expanded shale, expanded clay, boiler sand, lava, natural pumice, washed pumice or brick chippings.

6. The mantle block according to any one of the preceding claims,
wherein the mantle block has no additional coating on the inside and/or outside.

7. The mantle block according to any one of the preceding claims,
wherein the mantle block has a uniform structure along the flow direction.

8. The mantle block according to any one of the preceding claims,
which is formed as a mantle block produced by a vibratory compaction process, in particular with surcharge.

## Revendications

1. Boisseau pour cheminées, présentant une structure à plusieurs coques ayant un tube intérieur et une isolation thermique,
le boisseau étant réalisé sous forme de bloc creux à paroi mince dans le volume creux duquel peuvent être agencés le tube intérieur pour l'évacuation des fumées et l'isolation thermique entourant le tube intérieur, et étant produit à partir d'un mélange de béton,
le mélange de béton ayant une densité apparente comprise entre 1000 et 1300 kg/m³,
**caractérisé en ce que**
à une épaisseur de paroi (x) allant jusqu'à 5 cm, à une pression différentielle de 50 Pa, et par rapport à la surface extérieure (A) du boisseau (10), le boisseau (10) présente un débit volumique de fuite inférieur à 1,4 (m³/h)/m² le long d'une direction d'écoulement (z),
le mélange de béton étant préparé à partir d'une formulation contenant un plastifiant, et
la formulation ayant un rapport eau/ciment > 0,6.

2. Boisseau selon la revendication 1,
dans lequel le mélange de béton présente des agrégats, et
les agrégats contiennent des agrégats légers fins et/ou grossiers.

3. Boisseau selon l'une des revendications précédentes,
dans lequel la granulométrie des agrégats légers fins est inférieure à environ 4 mm, et
la granulométrie des agrégats légers grossiers est dans une plage d'environ 3 à 8 mm.

4. Boisseau selon l'une des revendications 2 à 3,
dans lequel les agrégats légers sont, au moins en partie, poreux, et
les agrégats légers poreux dans le mélange de béton présentent des creux/poches d'air.

5. Boisseau selon l'une des revendications 2 à 4,
dans lequel les agrégats légers sont choisis parmi l'un au moins des constituants suivants : verre expansé, schiste expansé, argile expansée, sable de chaudière, lave, pierre ponce naturelle, pierre ponce lavée ou briques concassées.

6. Boisseau selon l'une des revendications précédentes,
dans lequel le boisseau ne comporte aucun revêtement supplémentaire à l'intérieur et/ou à l'extérieur.

7. Boisseau selon l'une des revendications précédentes,
dans lequel le boisseau présente une structure uniforme le long de la direction d'écoulement.

8. Boisseau selon l'une des revendications précédentes,
qui est réalisé sous forme de boisseau produit par un procédé de compactage vibratoire, en particulier sous charge.
